# FASCICULE DE BREVET EUROPEEN

(11) **EP 1 921 341 B1**
(45) Date de publication et mention de la délivrance du brevet: **19.05.2010**
(21) Numéro de dépôt: 07291310.6
(22) Date de dépôt: 31.10.2007
(51) Int. Cl.: F16F 9/48, B64C 25/60

(54) **Amortisseur compact pour atterrisseur d'aéronef, et atterrisseur comportant un tel amortisseur**
Kompakter Stoßdämpfer für Fahrwerk von Luftschiffen und mit einem solchen Stoßdämpfer ausgestattetes Fahrwerk
Compact shock absorber for aircraft landing gear and landing gear comprising such a shock absorber

(30) Priorité: 13.11.2006 FR 0609906
(43) Date de publication de la demande: 14.05.2008
(73) Titulaire: MESSIER-DOWTY S.A., 78140 Velizy Villacoublay (FR)
(72) Inventeur: Lahargou, André, 91430 Vauhallan (FR); Brune, Marc, 77340 Pontault Combault (FR)
(74) Mandataire: Parzy, Benjamin Alain

(56) Documents cités:
- EP-A1- 0 398 797
- EP-A2- 1 085 233
- FR-A- 819 164
- FR-A1- 2 608 242
- GB-A- 942 804
- GB-A- 2 057 629

## Description

L'invention concerne un amortisseur compact pour atterrisseur d'aéronef, et un atterrisseur comportant un tel amortisseur.

### ARRIERE-PLAN DE L'INVENTION

Les atterrisseurs comportent en général un amortisseur oléopneumatique qui comprend un cylindre dans lequel une tige est montée pour coulisser télescopiquement. Dans les atterrisseurs directs, le cylindre est formé par le caisson de l'atterrisseur, tandis que la tige porte à son extrémité inférieure une ou plusieurs roues. Dans le cas des atterrisseurs à balancier articulé, la ou les roues sont portées par le balancier articulé, et l'amortisseur est monté articulé d'une part sur le balancier et d'autre part sur l'aéronef ou sur un caisson de l'atterrisseur.

L'amortisseur oléopneumatique comporte au moins une chambre pneumatique remplie de gaz qui est compressé lors de l'enfoncement de l'amortisseur. Il comporte en outre des moyens de laminage de fluide hydraulique lors de l'enfoncement, qui supposent une réserve de fluide hydraulique disposée en série avec la chambre remplie de gaz. L'amortissement du choc de l'atterrissage nécessite une certaine course d'enfoncement de l'amortisseur lors de laquelle le gaz est comprimé et le fluide hydraulique laminé. En règle générale, cette course est dé l'ordre de quelques dizaines de centimètres. Cette course, ainsi que la longueur de la chambre pneumatique et la longueur de la réserve de fluide hydraulique dimensionnent la longueur à vide de l'amortisseur.

Les aéronefs sont de plus en plus optimisés, et la place disponible en soute pour recevoir l'atterrisseur est de plus en plus limitée. L'avionneur spécifie en général la position de la ou des roues lorsque l'atterrisseur est en position détendue ainsi que la position de la ou des roues lorsque l'atterrisseur est en position rétractée. Le concepteur de l'atterrisseur tente alors de concevoir un atterrisseur dont la cinématique permet le respect des deux positions des roues spécifiées et qui puisse accommoder un amortisseur de longueur adéquate. Dans certains projets récents particulièrement optimisés, il n'a pas été possible de disposer un amortisseur oléopneumatique de technologie classique qui permette de respecter toutes les contraintes spécifiées. Sauf à demander à l'avionneur d'allouer un volume supplémentaire en soute, il apparaît donc un besoin pour un amortisseur plus court et plus compact permettant néanmoins de respecter les courses habituellement utilisées.

La situation est encore plus compliquée si, comme dans le cas de certains atterrisseurs à balancier articulé, comme ceux des hélicoptères, on demande à l'amortisseur d'assurer en plus la fonction d'extension/rétraction de l'atterrisseur. En effet, la course de rétraction est souvent plus grande que la course d'amortissement, ce qui allonge d'autant l'amortisseur.

On connaît des documents GB 2057629 (qui correspond au préambule de la revendication 1), EP 0398797, FR 819164, GB 942804, EP 1085233, des amortisseurs comportant au moins un cylindre auxiliaire externe recevant une chambre pneumatique de l'amortisseur.

### OBJET DE L'INVENTION

L'invention a pour objet un amortisseur à cylindre auxiliaire externe de structure simple.

### BREVE DESCRIPTION DE L'INVENTION

On propose un amortisseur selon la revendication 1.

Cette disposition évite que les pressions importantes qui se développent dans le cylindre principal du fait du laminage ne soient transmises dans la connexion et dans le ou les cylindres auxiliaires. En outre, les moyens de laminage peuvent être prévus solidaires du ou des cylindres auxiliaires, ce qui simplifie la construction du cylindre principal.

Ainsi, le ou les chambres pneumatiques sont rejetées dans un ou plusieurs cylindres auxiliaires externes, de sorte que le cylindre principal ne contient plus que du fluide hydraulique, ce qui simplifie la construction de l'ensemble, et rejette les problèmes d'étanchéité sur les cylindres auxiliaires qui ne subissent aucun effort mécanique structurel autres que ceux provenant de la pression régnant dans les cylindres auxiliaires externes. En particulier, les cylindres auxiliaires externes ne sont pas soumis à déformation du fait des efforts d'atterrissage. L'étanchéité au gaz y est donc plus simple à réaliser.

Selon un aspect particulier de l'invention, le ou les cylindres auxiliaires sont solidaires du cylindre principal. Ainsi, l'amortisseur forme un ensemble unitaire, sans qu'il soit nécessaire de prévoir des fixations spécifiques du ou des cylindres auxiliaires dans la soute de l'aéronef ou sur l'atterrisseur.

Selon une disposition préférée, le ou les cylindres auxiliaires sont rigidement fixés au cylindre principal, de sorte que la chambre de fluide hydraulique de chaque cylindre auxiliaire ne soit séparée de la réserve de fluide hydraulique du cylindre principal que par les moyens de laminage disposés en entrée du cylindre auxiliaire. Cette disposition permet d'éviter le recours à une connexion fluidique.

### BREVE DESCRIPTION DES DESSINS

Ces aspects de l'invention et d'autres aspects seront plus amplement compris à la lumière de l'unique figure des dessins annexés qui est une vue en coupe d'un amortisseur selon un mode particulier de réalisation de l'invention incorporant la fonction extension/rétraction, illustré en position détendue.

### DESCRIPTION DETAILLEE DE L'INVENTION

L'invention est illustrée ici en relation avec un amortisseur utilisé pour un atterrisseur principal d'hélicoptère du type comportant un balancier directement articulé sur le fuselage de l'hélicoptère, l'amortisseur représenté ici étant destiné à être monté articulé entre le balancier et un point d'articulation sur le fuselage.

L'amortisseur comporte ici un cylindre principal 1 dans lequel une tige 2 est montée à coulissement télescopique. A cet effet, la tige 2 porte un piston étanche 3 qui coulisse dans le cylindre principal 1 et qui définit dans celui-ci une chambre annulaire 4 et une chambre pleine 5 remplie de fluide hydraulique, formant une réserve de fluide hydraulique. Les extrémités du cylindre principal 1 et de la tige 2 portent des chapes 6,7 pour la liaison articulée de l'amortisseur sur le fuselage d'une part et sur le balancier de l'atterrisseur d'autre part.

L'amortisseur comporte un premier cylindre auxiliaire 10 monté rigidement sur le cylindre principal, par exemple ici par vissage avec interposition d'un joint d'étanchéité, à proximité de la chape d'extrémité 6 du cylindre principal 1. Le premier cylindre auxiliaire 10 s'étend selon une direction sensiblement perpendiculaire à un axe longitudinal X du cylindre principal 1. Un premier piston 11 est monté à coulissement étanche dans le premier cylindre auxiliaire 10 pour séparer l'intérieur de celui-ci en une première chambre pneumatique 12 remplie de gaz sous pression et une première chambre fluide 13 en communication avec la chambre pleine 5 du cylindre principal 1 via un premier organe de laminage 14.

L'amortisseur comporte un deuxième cylindre auxiliaire 20 monté rigidement sur le cylindre principal, par exemple ici par vissage avec interposition d'un joint d'étanchéité, à proximité de la chape d'extrémité 6 du cylindre principal 1. Le deuxième cylindre auxiliaire 20 s'étend de l'autre côté du cylindre principal 1 selon sensiblement la même direction que celle du premier cylindre auxiliaire 10. Un deuxième piston 21 est monté à coulissement étanche dans le deuxième cylindre auxiliaire 20 pour séparer l'intérieur de celui-ci en une deuxième chambre pneumatique 22 remplie de gaz sous pression et une deuxième chambre fluide 23 en communication avec la chambre pleine 5 du cylindre principal 1 via un deuxième organe de laminage 24.

Les organes de laminage 14,24 sont bien connus de l'homme du métier et ne feront pas ici l'objet d'une description détaillée.

Ici, la connexion fluidique entre la chambre pleine 5 et les cylindres auxiliaires 10,20 est réduite à sa plus simple expression, puisque les cylindres auxiliaires sont directement en communication avec la chambre plein 5 via les organes de laminage 14,24 disposés en entrée des cylindres auxiliaires, ce qui permet d'éviter tout recours à une tuyauterie.

La première chambre pneumatique 12 est gonflée à une première pression, tandis que la deuxième chambre pneumatique 22 est gonflée à une deuxième pression qui est supérieure à la première pression. Typiquement, la première chambre pneumatique 12 est gonflée à 20 bars, tandis que la seconde chambre pneumatique 22 est gonflée à 80 bars.

Le fonctionnement de l'amortisseur lors d'un atterrissage est le suivant. Sous l'action du balancier qui tend à enfoncer l'amortisseur, la tige 2 est enfoncée dans le cylindre principal 1, ce qui force le fluide hydraulique contenu dans la chambre pleine 5 à passer au travers des premier et second organes de laminage 14, 24 pour remplir les première et seconde chambres fluide hydrauliques 13,23, et ainsi repousser les premier et second pistons 11,21 pour compresser le gaz contenu dans le première et seconde chambres pneumatiques 12,22.

La chambre annulaire 4 est en temps normal reliée via une première vanne commandée 30 à une réserve de fluide hydraulique ou bâche de l'aéronef non représentée et dont la pression est typiquement de l'ordre de 5 bars, de sorte que la chambre annulaire 4 est remplie progressivement de fluide hydraulique lors de l'enfoncement de la tige 2, évitant ainsi toute cavitation.

Lorsque l'hélicoptère décolle, le gaz sous pression dans les chambres pneumatiques 12,22 repousse le fluide hydraulique contenu dans les chambres fluides 13,23 au travers des organes de laminage 14,24 vers la chambre pleine 5, ce qui repousse la tige 2 vers sa position détendue. Le fluide hydraulique contenu dans la chambre annulaire 4 est refoulé vers la réserve de fluide hydraulique sous pression de l'aéronef.

Les chambres pneumatiques étant ainsi rejetées dans les cylindres auxiliaires externes sur le côté du cylindre principal, l'amortisseur détendu a ainsi une longueur L prise entre les axes des chapes d'extrémité 6, 7 particulièrement compacte.

Selon un aspect particulier de l'invention, l'amortisseur est prévu pour permettre une rétraction du balancier, en vue de limiter la traînée aérodynamique de ce dernier en vol. A cet effet, on organise un raccourcissement commandé de l'amortisseur de la façon suivante. Du fluide hydraulique sous haute pression (typiquement 206 bars) est injecté dans la chambre annulaire 4 au moyen de la première vanne commandée 30, ce qui a tendance à faire rentrer la tige 2 dans le cylindre principal 1. Simultanément, une deuxième vanne commandée 31 permet de mettre en communication la chambre pleine 5 avec une bonbonne 40, de sorte que le fluide hydraulique contenu dans la chambre pleine 5 puisse être évacué vers ladite bonbonne 40. Le fluide hydraulique reçu dans la bonbonne 40 repousse un piston 41 monté coulissant dans la bonbonne 40, qui lui-même repousse le fluide hydraulique présent sous le piston 41 vers la réserve de l'aéronef. On notera ainsi que le fluide hydraulique issu de la chambre pleine 5 ne se mélange pas avec le fluide hydraulique de l'aéronef. Lorsque la tige 2 arrive en butée dans le fond du cylindre principal 1, on ferme alors la première vanne commandée 30 de sorte que le fluide hydraulique présent dans la chambre annulaire 4 soit emprisonné et empêche ainsi la détente de l'amortisseur.

On remarquera que lors de cette rétraction, les chambres pneumatiques 12,22 ne sont pas compressées puisque leur pression de gonflage est plus importante que la pression de la bonbonne 40 (sensiblement à la pression de la bâche, soit 5 bars), de sorte que le fluide hydraulique se dirige préférentiellement vers la bonbonne 40.

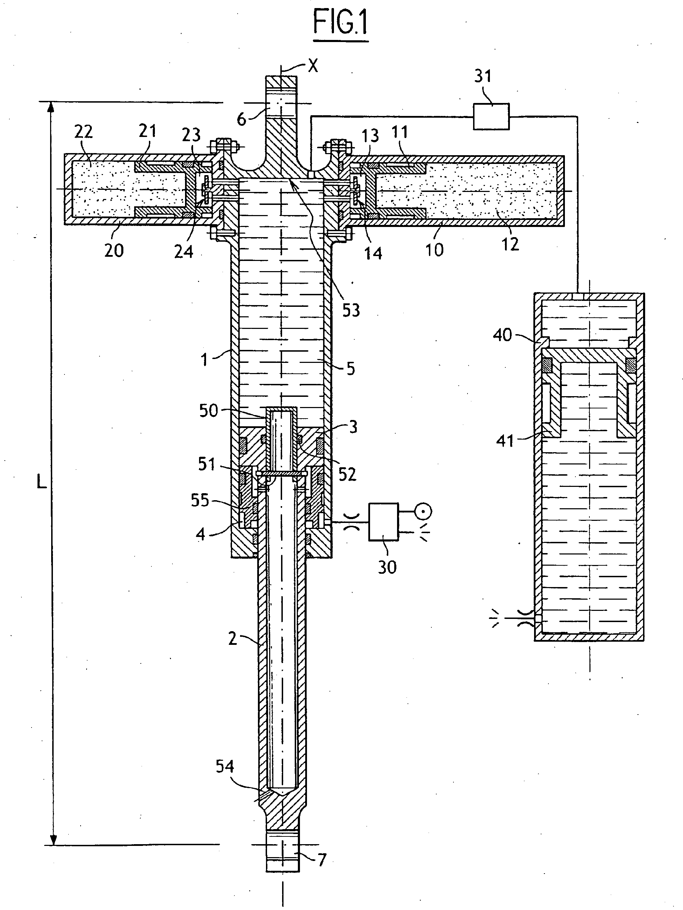

Pour faire revenir l'amortisseur en position détendue, il suffit d'ouvrir la première vanne commandée 30 pour mettre en communication la chambre annulaire 4 avec la réserve de l'aéronef, et dans le même temps, d'ouvrir la deuxième vanne commandée 31, si elle a été fermée. Il règne ainsi sensiblement la même pression de part et d'autre du piston 3, et grâce au jeu des différences de section de la chambre annulaire 4 et de la chambre principale 5, la tige est entraînée vers l'extérieur et l'amortisseur se détend, jusqu'à revenir à la position illustrée à la figure 1.

Selon l'invention, l'amortisseur est capable d'une surcourse en cas d'atterrissage particulièrement sévère. A cet effet, la tige 2 comporte un orifice creux débouchant du côté du piston 3 et reçoit une pièce de butée 50 dans le creux de la tige 2 pour saillir de la tige 2. La pièce de butée 50 est maintenue sur la tige par une goupille 51. La pièce de butée 50 comporte un fond, et un joint d'étanchéité 52 est disposé entre la tige 2 et la pièce de butée 50, ce qui permet d'isoler le creux de la tige vis-à-vis de la chambre pleine 5.

Lorsque l'amortisseur est utilisé pour rétracter l'atterrisseur, la pièce de butée 50 vient en butée contre le fond 53 du cylindre principal 1 et définit ainsi la position rentrée de l'amortisseur. Lorsque l'amortisseur est utilisé pour amortir les chocs à l'atterrissage, la pièce de butée 50 ne vient normalement pas accoster le fond 53 du cylindre principal 1. Cependant, dans certains cas d'atterrissage sévère, il se peut que non seulement la pièce de butée 50 vienne toucher le fond 53, mais, que l'énergie à absorber reste telle que ce contact ne suffit pas à arrêter l'enfoncement de l'amortisseur. Selon l'invention, la goupille 51 est alors prévue pour céder au-delà d'un seuil d'effort prédéterminé, afin d'une part d'absorber une partie du surplus d'énergie d'atterrissage par la rupture de la goupille 51, et afin d'autre part d'autoriser une surcourse de la tige 2 dans le cylindre principal 1, permettant une surcompression des chambres pneumatiques 12,22, ce qui contribue également à absorber une autre partie du surplus d'énergie d'atterrissage.

La rupture en cisaillement de la goupille propulse la pièce de butée 50 vers le fond du creux de la tige 2, de sorte que la pièce de butée 50 ne coopère plus avec le joint d'étanchéité 52. Le fluide hydraulique contenu dans la chambre pleine 5 peut alors s'écouler (lentement) entre l'organe de butée 52 et la paroi du creux de la tige 2 pour se vider par l'orifice d'évacuation 54 disposé en bas de tige et ainsi contribuer à diminuer la pression importante régnant dans l'amortisseur du fait de la surcompression.

On remarquera qu'en temps normal, l'orifice d'évacuation 54 risque de mettre en communication la chambre annulaire 4 avec l'air extérieur. Pour éviter que cet air ne se mélange au fluide hydraulique de l'aéronef, un piston flottant 55 est disposé à étanchéité entre le cylindre 1 et la tige 2 de sorte que l'arrivée de fluide hydraulique par la première vanne commandée 30 se fasse sous le piston flottant 55, tandis que l*'*air provenant de l'orifice d'évacuation 54 ne peut que remplir l'espace s'étendant entre le piston flottant 55 et le piston 3 de la tige 2. Il n'y a donc aucun risque de pollution du fluide hydraulique de l'aéronef par l'air extérieur.

L'invention n'est pas limitée à ce qui vient d'être décrit, mais bien au contraire englobe toute variante entrant dans le cadre défini par les revendications.

En particulier, bien que l'invention est illustrée ici en relation avec un amortisseur utilisé pour un atterrisseur d'hélicoptère du type comportant un balancier directement articulé sur le fuselage de l'hélicoptère, l'amortisseur représenté ici étant monté articulé entre le balancier et un point d'articulation sur le fuselage, l'invention n'est pas limitée à ce type d'atterrisseur ; elle peut par exemple parfaitement s'appliquer à un atterrisseur de type direct pour lequel le caisson forme le cylindre principal 1 et la tige 2 porte directement la ou les roues.

Bien que l'on ait illustré les cylindres auxiliaires directement fixés sur le cylindre principal de sorte que l'organe de laminage soit disposé en entrée des cylindres auxiliaires, les cylindres auxiliaires pourront être disposés ailleurs. Par exemple, on pourra les fixer sur le côté du cylindre principal, parallèlement à celui-ci, les cylindres auxiliaires étant reliés au cylindre principal par une connexion fluidique, par exemple une tuyauterie rigide. On pourra également fixer les cylindres auxiliaires dans la soute de l'aéronef, ce qui oblige à prévoir des interfaces supplémentaires sur l'aéronef. Dans ce cas, il faudra prévoir une connexion fluidique avec un tronçon flexible ou permettant d'accommoder les mouvements de l'amortisseur par rapport à la soute. Dans touts les cas, on disposera de préférence les organes de laminage en entrée des connexions fluidiques, de sorte que celles-ci et les cylindres auxiliaires ne subissent pas les fortes pressions régnant dans la chambre pleine 5 lors de l'enfoncement de l'amortisseur.

Bien que l'on ait illustré ici un amortisseur à deux chambres pneumatiques, on pourra bien sûr appliquer l'invention à un amortisseur à une seule chambre pneumatique, ou au contraire, à plus de deux chambres pneumatiques. On peut par exemple disposer les deux chambres pneumatiques en série dans un même cylindre auxiliaire.

## Revendications

1. Amortisseur pour atterrisseur d'aéronef comportant un cylindre principal (1) dans lequel une tige (2) est montée à coulissement télescopique, l'amortisseur comportant une ou plusieurs chambres pneumatiques (12, 22) remplies de gaz, une réserve de fluide hydraulique (5) et des moyens de laminage (14, 24) du fluide hydraulique de sorte que lorsque l'amortisseur est enfoncé, le gaz de la ou des chambres pneumatiques est compressé et le fluide hydraulique laminé, dans lequel la ou les chambres pneumatiques sont toutes contenues dans un ou plusieurs cylindres auxiliaires (10, 20) externes au cylindre principal et dans chacun desquels un piston étanche (11, 21) est monté coulissant pour séparer une chambre pneumatique (12, 22) contenue dans ledit cylindre auxiliaire externe d'une chambre fluide (13, 23) en communication fluidique avec le cylindre principal, **caractérisé en ce que** les moyens de laminage (14, 24) sont disposés à l'entrée d'une connexion fluidique entre le cylindre principal (1) et le ou les cylindres auxiliaires (10, 20), les cylindres auxiliaires étant directement en communication avec la réserve de fluide hydraulique (5) via les moyens de laminage disposés dans l'entrée des cylindres auxiliaires.

2. Amortisseur selon la revendication 1, dans lequel le ou les cylindres auxiliaires (10, 20) sont solidaires du cylindre principal (1).

3. Amortisseur selon la revendication 2, dans lequel le ou les cylindres auxiliaires (10, 20) sont rigidement fixés au cylindre principal, la chambre de fluide hydraulique de chaque cylindre auxiliaire (10, 20) n'étant séparée de la réserve de fluide hydraulique du cylindre principal que par les moyens de laminage (14, 24) disposés en entrée dudit cylindre auxiliaire.

4. Amortisseur selon la revendication 3, dans lequel le ou les cylindres auxiliaires (10, 20) s'étendent selon une direction sensiblement perpendiculaire à un axe longitudinal (X) de l'amortisseur.

5. Amortisseur selon la revendication 1, comportant des moyens commandés (30) pour injecter du fluide hydraulique dans une chambre annulaire (4) s'étendant entre la tige et le cylindre principal, et des moyens commandés (31) pour évacuer simultanément du fluide hydraulique contenu dans la réserve de fluide (5).

6. Amortisseur selon la revendication 5, comportant une bonbonne (40) associée pour recevoir le fluide hydraulique issu de la réserve de fluide (5).

7. Amortisseur selon la revendication 1, comportant des moyens de butée (50, 53) définissant une position rentrée la tige dans le cylindre principal.

8. Amortisseur selon la revendication 7, dans lequel les moyens de butée sont effaçables au-delà d'un seuil d'effort prédéterminé pour permettre une surcourse de l'amortisseur au moins en cas d'atterrissage sévère.

9. Atterrisseur comportant au moins un amortisseur selon l'une des revendications précédentes.

## Claims

1. A shock absorber for an aircraft undercarriage, the shock absorber comprising a main cylinder (1) in which a rod (2) is mounted to slide telescopically, the shock absorber having one or more pneumatic chambers (12, 22) filled with gas, a supply of hydraulic fluid (5), and throttle means (14, 24) for throttling the hydraulic fluid such that when the shock absorber is shortened, the gas in the pneumatic chamber(s) is compressed and the hydraulic fluid is throttled, in which the pneumatic chamber(s) is/are fully contained in one or more auxiliary cylinders (10, 20) external to the main cylinder, and in each of which a sealed piston (11, 12) is slidably mounted to separate a pneumatic chamber (12, 22) contained in said external auxiliary cylinder from a fluid chamber (13, 23) in fluid flow communication with the main cylinder, the shock absorber being **characterized in that** the throttle means (14, 24) are disposed at the inlet of a fluid flow connection between the main cylinder (1) and the auxiliary cylinder(s) (10, 20), said auxiliary cylinders being directly in communication with the hydraulic fluid supply through the throttle means that are disposed at the inlet of the auxiliary cylinders.

2. A shock absorber according to claim 1, in which the auxiliary cylinder(s) (10, 20) is/are secured to the main cylinder (1).

3. A shock absorber according to claim 2, in which the auxiliary cylinder(s) (10, 20) is/are fastened rigidly to the main cylinder, the hydraulic fluid chamber in each auxiliary cylinder (10, 20) being separated from the hydraulic fluid supply of the main cylinder solely by the throttle means (14, 24) disposed at the inlet to each said auxiliary cylinder.

4. A shock absorber according to claim 3, in which the auxiliary cylinder(s) (10, 20) extend(s) in a direction that is substantially perpendicular to a longitudinal axis (X) of the shock absorber.

5. A shock absorber according to claim 1, including controlled means (30) for injecting hydraulic fluid into an annular chamber (4) extending between the rod and the main cylinder, and controlled means (31) for simultaneously exhausting the hydraulic fluid contained in the supply (5) of fluid.

6. A shock absorber according to claim 5, including an associated flask (40) for receiving the hydraulic fluid coming from the supply (5) of fluid.

7. A shock absorber according to claim 1, including abutment means (50, 53) defining a retracted position of the rod in the main cylinder.

8. A shock absorber according to claim 7, in which the abutment means can be retracted beyond a predetermined force threshold bay so as to allow the shock absorber to perform overtravel, at least in the event of a hard landing.

9. An undercarriage including at least one shock absorber according to any preceding claim.

## Patentansprüche

1. Stoßdämpfer für Flugzeugfahrwerk, umfassend einen Hauptzylinder (1), in dem eine Stange (2) teleskopisch verschiebbar gelagert ist, wobei der Stoßdämpfer eine oder mehrere mit Gas gefüllte pneumatische Kammern (12, 22), eine Hydraulikfluid-Reserve (5) und Drosselmittel (14, 24) für das Hydraulikfluid umfasst, um das Hydraulikfluid derart zu drosseln, dass, wenn der Stoßdämpfer einfährt, das Gas der pneumatischen Kammer oder Kammern komprimiert und das Hydraulikfluid gedrosselt wird, wobei die pneumatische Kammer oder die pneumatischen Kammern alle in einem oder mehreren Hilfszylindern (10, 20) enthalten sind, die außerhalb des Hauptzylinders liegen und in denen jeweils ein dichtender Kolben (11, 21) verschiebbar gelagert ist, um eine pneumatische Kammer (12, 22), die in dem genannten außerhalb liegenden Hilfszylinder enthalten ist, von einer Fluidkammer (13, 23) zu trennen, die in Fluidverbindung mit dem Hauptzylinder steht, **dadurch gekennzeichnet, dass** die Drosselmittel (14, 24) am Einlass einer Fluidverbindung zwischen dem Hauptzylinder (1) und dem oder den Hilfszylindern (10, 20) angeordnet sind, wobei die Hilfszylinder über die in dem Einlass der Hilfszylinder angeordneten Drosselmittel direkt mit der Hydraulikfluid-Reserve (5) in Verbindung stehen.

2. Stoßdämpfer nach Anspruch 1, wobei der oder die Hilfszylinder (10, 20) fest mit dem Hauptzylinder (1) verbunden sind.

3. Stoßdämpfer nach Anspruch 2, wobei der oder die Hilfszylinder (10, 20) starr am Hauptzylinder befestigt sind, wobei die Hydraulikfluidkammer jedes Hilfszylinders (10, 20) nur durch die am Einlass des genannten Hilfszylinders angeordneten Drosselmittel (14, 24) von der Hydraulikfluid-Reserve des Hauptzylinders getrennt ist.

4. Stoßdämpfer nach Anspruch 3, wobei der oder die Hilfszylinder (10, 20) sich in einer Richtung erstrecken, die im Wesentlichen senkrecht zu einer Längsachse (X) des Stoßdämpfers ist.

5. Stoßdämpfer nach Anspruch 1, umfassend gesteuerte Mittel (30) zum Einspritzen des Hydraulikfluids in eine Ringkammer (4), die sich zwischen der Stange und dem Hauptzylinder erstreckt, sowie gesteuerte Mittel (31) zum gleichzeitigen Abführen des in der Fluid-Reserve (5) enthaltenen Hydraulikfluids.

6. Stoßdämpfer nach Anspruch 5, umfassend einen dazugehörigen Behälter (40) zum Aufnehmen des von der Fluid-Reserve (5) abgegebenen Hydraulikfluids.

7. Stoßdämpfer nach Anspruch 1, umfassend Anschlagmittel (50, 53), die eine eingefahrene Stellung der Stange in dem Hauptzylinder definieren.

8. Stoßdämpfer nach Anspruch 7, wobei die Anschlagmittel jenseits einer vorgegebenen Kraftschwelle wirksam sind, um einen Überhub des Stoßdämpfers zumindest im Falle einer harten Landung zu ermöglichen.

9. Fahrwerk, umfassend mindestens einen Stoßdämpfer nach einem der vorhergehenden Ansprüche.
